# EUROPEAN PATENT APPLICATION

(11) **EP 1 588 652 A1**
(43) Date of publication of application: **26.10.2005**
(21) Application number: 04703911.0
(22) Date of filing: 21.01.2004
(51) Int. Cl.: A47G 25/36, A47G 25/20

(54) **HANGER**

(30) Priority: 22.01.2003 JP 2003013298
(71) Applicant: SHIMA SEIKI MANUFACTURING, LTD., Wakayama 641-8511 (JP)
(72) Inventor: ARIKITA, Reiji, SHIMA SEIKI MANUFACTURING LIMITED, Wakayama-shi, Wakayama 6418511 (JP); NAKAI, Kenji, SHIMA SEIKI MANUFACTURING LIMITED, Wakayama-shi, Wakayama 6418511 (JP)
(74) Representative: Fritz, Edmund Lothar
(86) International application number: PCT/JP2004/000447
(87) International publication number: WO 2004/064580

(57) **Abstract**

An object of the invention is to provide a hanger inflatable according to the three-dimensional design of garments by using a simple structure. Peripheral sides of two soft external sheet materials (2, 3) are joined airtight to each other to form a hook joint (4) and a peripheral joint (5) of the other portion at the top of the sheet materials, and air is blown into the bonded sheet materials. An internal member (10) is installed between the external sheet materials (2, 3) so that the cross section thereof becomes an asymmetric X-shape. Since a space of in-and-outside joints (14, 15) against the anterior external sheet material (2) is smaller than a space of in-and-outside joints (16, 17) against the posterior external sheet material (3), the internal member (10) can form a more projected curved surface so that a proper shape can be easily provided for the garments three-dimensionally designed according to the breast of a human body on which a three-dimensional shape is anteroposteriorly different. When the external sheet materials (2, 3) are transparent, the internal member (10) can be clearly viewed from the outside. When advertisement is put on the internal member (10), the effect of the advertisement can be increased.

## Description

### Technical Field

The present invention relates to a hanger which is used by inflating the hanger with air and the like blown thereinto.

### Background Art

Hangers have hitherto been widely used for the storage and display of garments. Ordinary hangers are formed of rigid materials such as synthetic resins, wood, and metals. Such rigid hangers have a small anteroposterior depth relatively to that of a human body which is supposed to put a garment on. Hangers having larger depth are space consuming per se and accordingly storing or showing garments hung up on hangers needs much space.

Usually garments are made so as to have a difference in three-dimensional (3D) geometry between front bodies and back bodies of the garments to adapt to the 3D geometry of a human body which garments are put on. In particular, in the case of flexible knitted products such as a sweater and the like, when they are hanged on a hanger having small depth, they will lead to losing their own shapes. As a hanger on which a sweater and the like can be put without losing its shape and which is not space consuming in storing can be given an inflatable type hanger in which peripheries of two flexible sheet materials are bonded together and air is blown into the inside of the bonded sheet materials (for example, see the Japanese Unexamined Utility Model Publication JP-U 63-179879 (1988)).

The hanger disclosed in JP-U 63-179879 (1988) is such that it becomes a 3D hanger by inflating it with air blown thereinto, and when air is discharged therefrom, its depth can be reduced up to approximately the thickness of the two sheet materials put on top of each other, and it can be folded because the sheet materials are flexible, thereby reducing the space needed for storage. However, since such a hanger has an approximately constant depth, it is not possible to inflate the hanger so as to have a different geometry anteroposteriorly like a human body. Furthermore, the hanger can endure a lightweight sweater thereon, but, since the hanger is not strong enough, when a relatively heavy garment is put thereon and the hanger can no longer endure the weight of the garment, the hanger may be deformed in shape. Accordingly, it is difficult to make a display in which the 3D design of the garment is sufficiently presented..

On page 4 of JP-U 63-179879 (1988), it is disclosed as folllows. "A hanger according to the present device has various advantages described heretofore, and therefore, can be used in a variety of applications.

First, it can be used in place of a conventional hanger;

Since it can be folded, it can be taken along for traveling.

It can serve as a simplified hanger for laundry shops or tailor shops;

Since it is inexpensive, it can serve as an advertising novelty item;

Since cartoons and images of popular characters can be printed thereon; it can be used for children.

Since advertising messages can be printed thereon, it can be used for advertising;

It can serve as padding when garments are placed in a garments box."

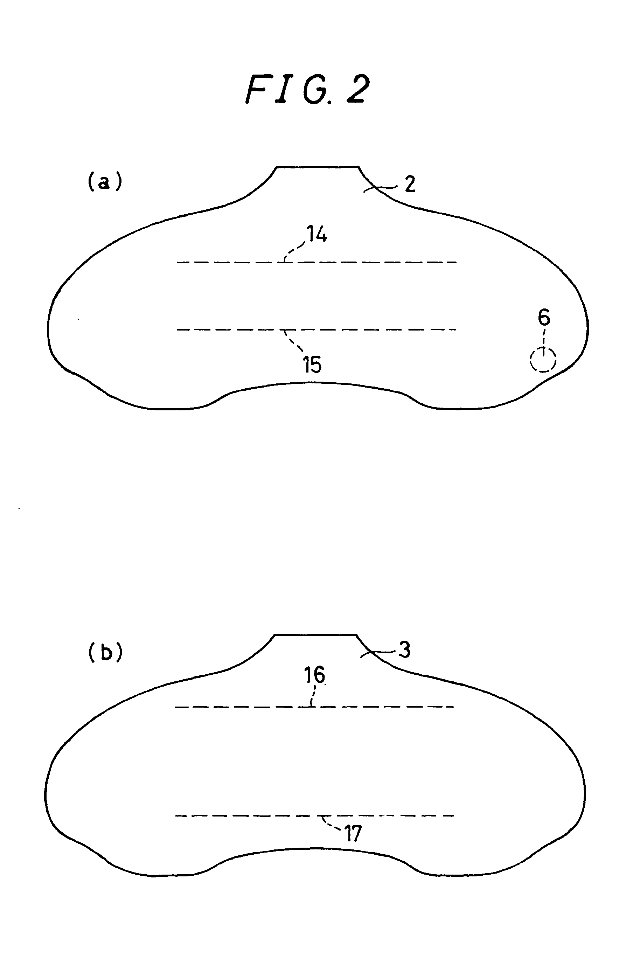

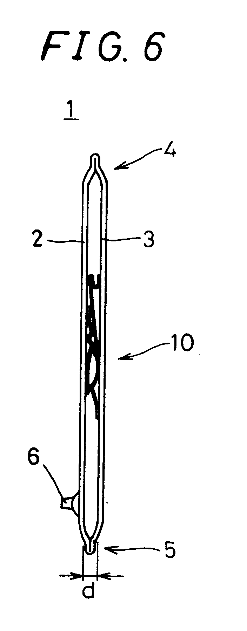

As an example of a 3D geometry of an inflated hanger, Figs. 2, 3 and 4 of JP-U 63-179879 (1988) depicts a cross-sectional side profile of a hanger which has a bulge in an intermediate portion thereof. Fig. 6 depicts a cross-sectional side profile of a hanger having a constricted part in an intermediate portion thereof. However, there is no description as to how such a constricted part is formed. In any event, there is no description of any idea of forming the 3D geometries so as to be anteroposteriorly different. Further, although there is a description that the hanger is used for advertising and the like by making prints on the surfaces of the sheet materials, the contents of the prints will be deformed because the surfaces of the sheet materials are inflated.

### Disclosure of Invention

An object of the invention is to provide a hanger with a simple constitution which can be inflated to fit to a 3D design of garments.

The invention is to provide a hanger comprising two external sheet materials of soft synthetic resin layered on each other, the hanger being formed by bonding peripheries of the two external sheet materials and being capable of being inflated so as to have different geometries anteroposteriorly by filling the inside of the bonded sheet materials with a gas in accordance with a three dimension geometry of a garment,
the hanger comprising an internal member connected to a widthwise intermediate portion between the two external sheet materials, the internal member being formed by bonding two internal sheet materials each of which has two linear sides parallel to each other and is flexible, in an intermediate portion between the two parallel sides of the two internal sheet materials,
the parallel sides of each of the internal sheet materials being bonded to the two external sheet materials, respectively, in two positions spaced apart above and below so that the bonding space for the posterior external sheet material is larger than that of the anterior external sheet material, and

the internal member, with the hanger inflated, having a cross section in an anteroposteriorly asymmetrical X-shaped configuration, as viewed from a side perpendicular to the anteroposterior direction.

Furthermore, in the invention, at least one of the external sheet materials is transparent.

### Brief Description of Drawings

Other and further objects, features, and advantages of the invention will be more explicit from the following detailed description taken with reference to the drawings wherein:
Fig. 1 is a front view and a cross-sectional side view of a hanger 1, in an inflated state, according to an embodiment of the invention;
Fig. 2 is a plan view showing outlines of the external sheet materials 2 and 3 of the hanger 1 in Fig. 1;
Fig. 3 is a side view showing the state in which the space between the external sheet materials 2 and 3 is connected with an internal member 10, in the hanger 1 of Fig. 1;
Fig. 4 is a plan view showing outlines of the internal sheet materials 11, 12 of the hanger 1 of Fig. 1;
Fig. 5 is a schematic manufacturing flow chart for manufacturing the hanger 1 of Fig. 1; and
Fig. 6 is a cross-sectional side view showing the hanger 1 of Fig. 1 with air released therefrom.

### Best Mode for Carrying out the Invention

Now referring to the drawings, preferred embodiments of the invention are described below.

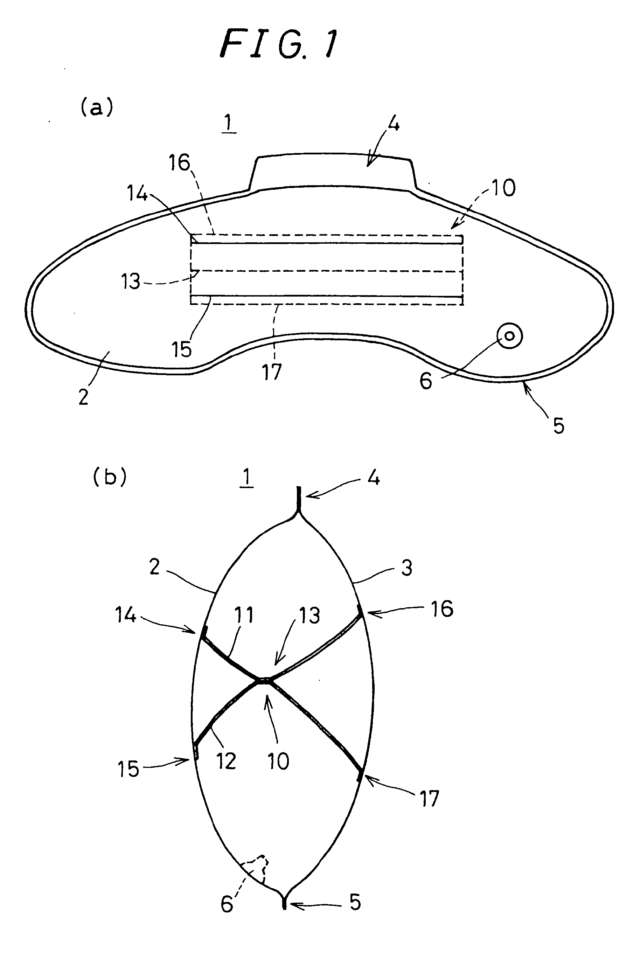

Fig. 1 shows a schematic shape of a hanger 1 according to an embodiment of the invention. Fig. 1 (a) shows a front view shape and Fig. 1(b) shows a cross-sectional side view shape, respectively. In the hanger 1 of this embodiment, two external sheet materials 2, 3 of soft synthetic resin are layered on each other; a top hook joint 4 and a peripheral joint 5 are bonded; and gas such as air is blown into the inside of the bonded sheet materials through an air blowing inlet 6, thereby enabling inflating the hanger so as to form different geometries anteroposteriorly, in accordance with the 3D geometry of garments. The hangar includes an internal member 10 connected to a widthwise intermediate portion between the two external sheet materials 2 and 3.

The internal member 10 is formed by bonding two internal sheet materials 11, 12 each of which has the two linear sides parallel to each other and is flexible, in an intersecting joint 13 located midway between the two parallel sides. The parallel sides of each of the internal sheet materials 11, 12 are bonded in two positions spaced apart above and below, at in-and-outside joints 14, 15; 16, 17, respectively. The position of the intersecting joint 13 gets close to the side of the anterior external sheet material 2 between the two external sheet materials 2 and 3 so that the space of the in-and-outside joints 16, 17 against the posterior external sheet material 3 is larger than the space of the in-and-outside joints 14, 15 against the anterior external sheet material 2. In this way, with the hanger 1 inflated, the internal member 10 has a cross section in an anteroposteriorly asymmetrical X-shaped configuration, as viewed from a side perpendicular to the anteroposterior direction. Since internal member 10 has the cross section in an anteroposteriorly asymmetrical X-shaped configuration, with respect to the swelling of the external sheet materials 2, 3, the anterior swelling has a smaller radius of curvature than the posterior swelling and results in having a convex surface, thereby enabling matching the difference in swelling between a chest and a back of a human body.

Fig. 2(a) shows a shape of the anterior external sheet material 2 and the positions of the in-and-outside joints 14, 15, and Fig. 2 (b) shows a shape of the posterior external sheet material 3 and the in-and-outside joints 16, 17. The external sheet materials 2, 3 can have the same shape anteroposteriorly, and a soft, non-gas permeable and flexible synthetic resin material sheet, for instance, a vinyl chloride sheet and the like having a thickness of 0.2 mm can be used as an external sheet material. Even with the same shape, the external sheet materials 2, 3 can also have a different thickness anteroposteriorly. Although the air blowing inlet 6 is provided in the anterior external sheet material 2, it can be provided in the posterior external sheet material 3. For the air blowing inlet 6, such an air blowing inlet as is widely used in a swimming rubber ring and the like can be used. With the hanger inflated, the air blowing inlet 6 can be pressed therein so that it cannot jut out of the surface thereof.

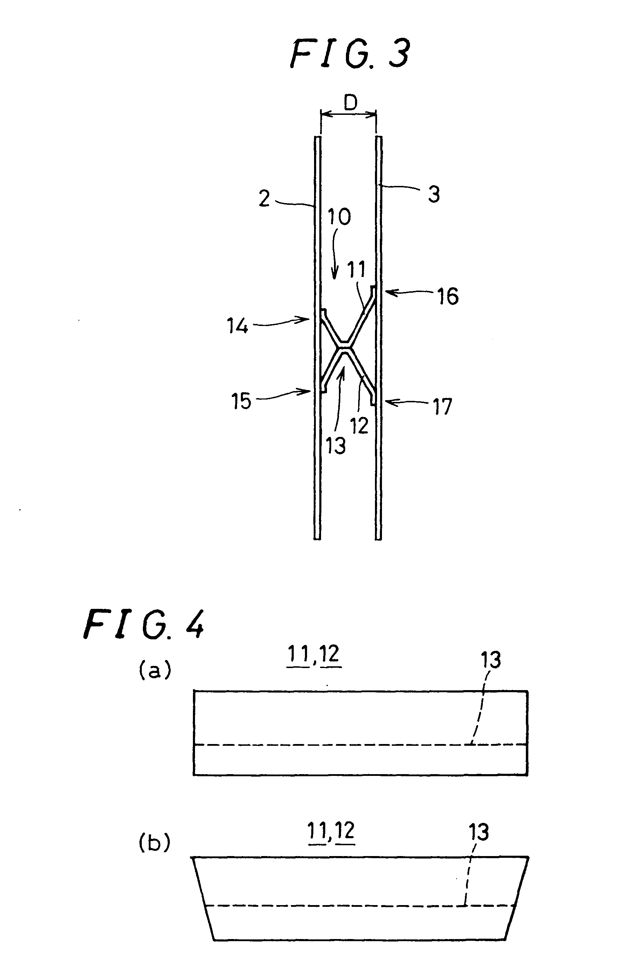

Fig. 3 shows the state of bonding the external sheet materials 2, 3 and the internal member 10. It should be noted, however, that thicknesses of the external sheet material 2, 3 and the internal sheet materials 11, 12 are displayed exaggeratingly so as to be larger than the actual ratio relative to the outlines. The two sheets of external sheet materials 2, 3 and the internal member 10 are bonded such that the space D is kept between the external sheet materials 2 and 3. As mentioned above, the spacing between the posterior in-and-outside joints 16 and 17 is larger than that between the anterior in-and-outside joints 14 and 15. For the internal sheet materials 11, 12 of the internal member 10, the same material as that of the external sheet materials 2, 3 can be used. Furthermore, in a case where the material has flexibility, it can have air permeability. Metallic foil can also be used. Although the two internal sheet materials 11, 12 are divided into upper and lower parts and then bonded at the intersecting joint 13 in the intermediate portion, they can be divided into anterior and posterior portions.

Fig. 4 shows a shape of the internal sheet materials 11, 12. Fig. 4 (a) and Fig. 4 (b) show the shapes thereof in the case of a rectangle and in the case of a trapezoid, respectively. The sides to be bonded to the external sheet materials 2, 3 are linear and may face so as to be parallel to each other. Furthermore, in a case where the internal sheet materials 11, 12 are bonded by folding the sides thereof to the external sheet materials 2, 3, the sides may be linear and parallel to each other with the sides folded, and the contour lines may not necessarily be parallel or linear. One of the internal sheet materials 11, 12 can be rectangular and another can be trapezoid, and one side of the anterior and posterior sides from the intersecting joint 13 can be rectangular and another side thereof can be trapezoidal. The connecting portion between the two parallel sides may be curved line.

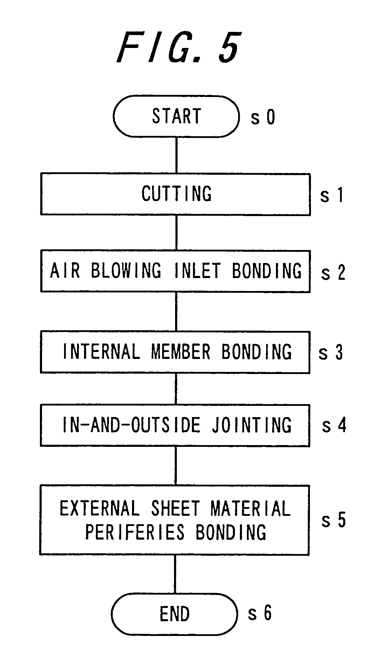

Fig. 5 shows an example of a schematic flow chart for manufacturing the hanger 1 as shown in Fig. 1. Manufacturing of the hanger is started with step s0. At step s1, external sheet materials 2, 3 and internal sheet materials 11, 12 are cut, respectively. At step s2, an air blowing inlet 6 is bonded to one of the external sheet materials 2, 3. At step s3, the internal sheet materials 11 and 12 are bonded to each other at an intersecting joint 13 to form an internal member 10. At step s4, the internal member 10 and the external sheet material 2, 3 are bonded at in-and-outside joints 14, 15; 16, 17. At step s5, peripheries of the external sheet materials 2, 3 are bonded as a hook joint 4 and a peripheral joint 5. At step s6, manufacture of the hanger 1 is finished. The bonding of the air blowing inlet 6 at step s2 and the bonding of the internal member 10 at step s3 can be carried out at the same time or in a different order.

The bonding at each step of steps s2 to s5 can be carried out by, for example, thermal compression method and ultrasonic compression method. Further, such bonding can be carried out using an adhesive. Although the bonding at steps s2 and s5 is required to be carried out hermetically, the bonding at steps s3 and s4 is not necessarily needed to be carried out hermetically.

Fig. 6 shows a cross-sectional side view of the hanger 1 shown in Fig. 1 with the inside air released. As shown in Fig. 3, the internal member 10 is bonded to the in-and-outside joints 14, 15; 16, 17 so as to be linear when the spacing between the external sheet materials 2 and 3 is D, the thickness of the internal sheet can be smaller to the thickness d, where d is smaller than D, namely d < D, by folding back the internal sheet materials 11, 12 having flexibility. With the hanger inflated as shown in Fig. 1 (b), the inside of the hanger 1 is reinforced by the internal member 10, thereby enabling maintaining a sufficient strength. Thus, it is possible to sufficiently hang garments designed in accordance with the 3D geometry of a human body for the display and storage of the garments. When a gas inside the hanger 1 is released, the depth thereof becomes smaller as shown in Fig. 6, and further, it becomes possible to fold the hanger. Accordingly, the storage and transport of the hanger can be accomplished easily.

In a case where at least one of the external sheet materials 2, 3 is transparent, the internal member 10 can be seen from the outside of the hanger 1. When the internal member 10 is provided with an advertising logo and the like, with the hanger inflated, the internal sheet materials 11, 12 constituting the internal member 10 becomes flat by being pulled between the anterior and posterior external sheet materials 2 and 3, and therefore the advertising logo and the like can be displayed without any deformation, thereby enhancing advertising effects.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

### Industrial Applicability

According to the invention described heretofore, a hanger which is formed by bonding the peripheries of two external sheet materials of soft synthetic resin layered on each other and can be inflated so as to have different geometries anteroposteriorly by filling the inside of the bonded sheet materials with a gas in accordance with the 3D geometry of garments, can be realized by an internal member connected to a widthwise intermediate portion between the two external sheet materials. Since the internal member is formed by bonding two internal sheet materials each of which has two linear sides parallel to each other and is flexible, in an intermediate portion between the parallel sides of the two internal sheet materials, it is possible to manufacture the internal member easily. The parallel sides of each of the internal sheet materials are bonded to the two external sheet materials, respectively, in two positions spaced apart above and below so that the bonding space for the posterior external sheet material is larger than that for the anterior external sheet material. With the hanger inflated between the external sheet materials, the internal member has a cross section in an anteroposteriorly asymmetrical X-shaped configuration, as viewed from a side perpendicular to the anteroposterior direction. Accordingly, with respect to the swelling of the external sheet materials, the anterior swelling has a smaller radius of curvature than the posterior swelling and results in having a convex surface, thereby matching the difference between a chest and a back of a human body.

With the hanger inflated, the inside of the hanger is reinforced by the internal member, thereby enabling maintaining a sufficient strength. Thus, it is possible to sufficiently hang garments designed in accordance with the 3D geometry of a human body for the display and storage of the garments. When the gas inside the hanger is released, the depth thereof becomes smaller, and further, it becomes possible to fold the hanger. Accordingly, the storage and transport of the hanger can be accomplished easily.

Furthermore, according to the invention, since at least one of the external sheet materials is transparent, the internal member can be seen from the outside of the hanger. When the internal member is provided with an advertising logo and the like, the internal sheet materials constituting the internal member becomes flat by being pulled between the anterior and posterior external sheet materials with the hanger inflated, and therefore the advertising logo and the like can be displayed without any deformation, thereby enhancing advertising effects.

## Claims

1. A hanger comprising:
two external sheet materials of soft synthetic resin layered on each other, the hanger being formed by bonding peripheries of the two external sheet materials and being capable of being inflated so as to have different geometries anteroposteriorly by filling the inside of the bonded sheet materials with a gas in accordance with a three dimension geometry of a garment,
the hanger further comprising:
an internal member connected to a widthwise intermediate portion between the two external sheet materials, the internal member being formed by bonding two internal sheet materials each of which has two linear sides parallel to each other and is flexible, in an intermediate portion between the two parallel sides of the two internal sheet materials,
the parallel sides of each of the internal sheet materials being bonded to the two external sheet materials, respectively, in two positions spaced apart above and below so that the bonding space for the posterior external sheet material is larger than that of the anterior external sheet material, and
the internal member, with the hanger inflated, having a cross section in an anteroposteriorly asymmetrical X-shaped configuration, as viewed from a side perpendicular to the anteroposterior direction.

2. The hanger of claim 1, wherein at least one of the external sheet materials is transparent.
